# EUROPEAN PATENT SPECIFICATION

(11) **EP 4 473 885 B1**
(45) Date of publication and mention of the grant of the patent: **01.04.2026**
(21) Application number: 24180156.2
(22) Date of filing: 05.06.2024
(51) Int. Cl.: A47K 10/06, H01H 35/02, F24H 15/37, F24H 15/128, G05D 23/19, F24H 9/20, F24H 3/00, F24D 13/04

(54) **IMPROVED THERMOSTAT AND HEATING APPARATUS USING SAID THERMOSTAT**
VERBESSERTER THERMOSTAT UND HEIZGERÄT MIT DIESEM THERMOSTAT
THERMOSTAT AMÉLIORÉ ET APPAREIL DE CHAUFFAGE UTILISANT LEDIT THERMOSTAT

(30) Priority: 08.06.2023 IT 202300011715
(43) Date of publication of application: 11.12.2024
(73) Proprietor: Selmo Srl, 35030 Rubano (PD) (IT)
(72) Inventor: FANTIN, Alessandro, 35030 Selvazzano Dentro (PD) (IT)
(74) Representative: Marchioro, Paolo

(56) References cited:
- EP-A1- 3 315 868
- CN-A- 112 244 680
- CN-A- 113 558 514
- CN-U- 201 759 459
- CN-U- 209 639 274
- DE-A1- 102004 008 636

## Description

The invention relates to an improved thermostat adapted to be installed in electrical apparatuses of various types and particularly in electrical heating apparatuses, generally referred to as "towel radiators". Thermostats are known from CN 113 558 514 A, EP 3 315 868 A1, CN 201 759 459 U, CN 112 244 680 A, CN 209 639 274 U and DE 10 2004 008636 A1.

As is well known, a towel radiator substantially comprises two or more vertical tubular manifolds to which a plurality of horizontal pipes are connected, within which a heat-transfer fluid, consisting of water or diathermic oil heated by means of an electrical resistance, circulates.

The towel radiator thus takes on a shape that substantially looks like that of a ladder and is usually applied on the wall to act as a heater, if it is able to provide such a sufficient heat output to heat the room wherein it is installed.

On the other hand, if the heat output delivered by the towel radiator is insufficient to heat the room wherein it is installed, its use is only limited to heating towels or flannels, and it is in fact called a "towel warmer".

Regardless of whether the towel radiator is a heater or a towel warmer, the heating of the heat-transfer fluid takes place, as mentioned above, by means of an electrical resistance immersed in the heat-transfer fluid, which is supplied by an electrical current and controlled by a thermostat.

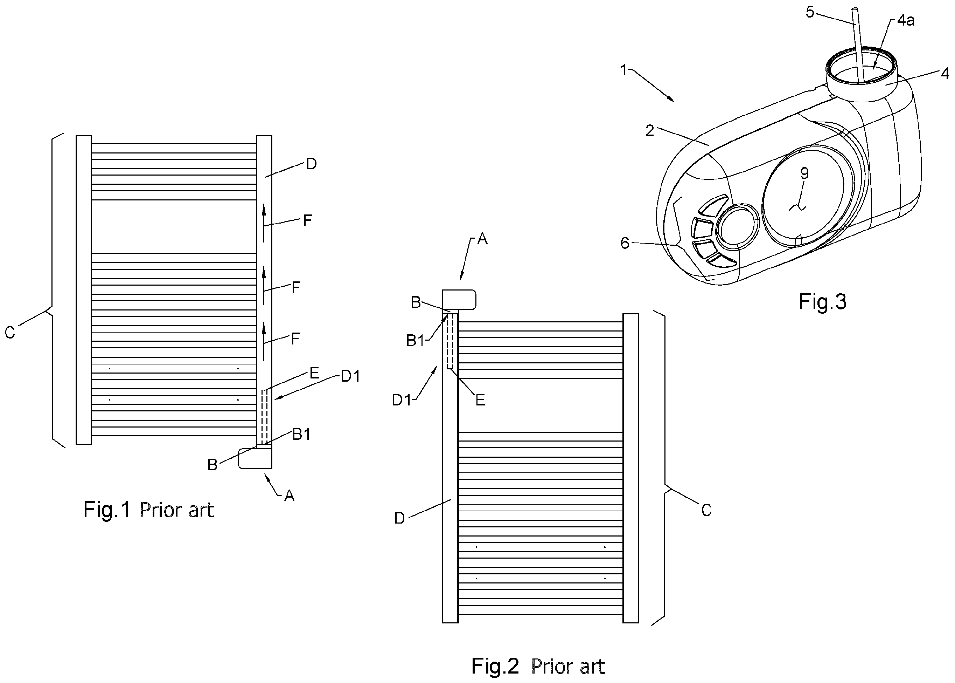

By way of example, a thermostat of the prior art globally indicated with A is shown in Figure 1, where, as it can be noted, it comprises a cable gland ferrule B which is for connecting it to the towel radiator C and for allowing the passage of the electrical conductors which connect the thermostat A to an electrical resistance E inserted in the lower end D1 of the upright D of the towel radiator C and immersed in the heat-transfer fluid.

For this purpose, it can be seen in Figure 1 that the port B1 of the cable gland ferrule B faces upwards.

The installation position shown in Figure 1 is the one that allows the correct operation of the towel radiator C, since the heat-transfer fluid that is heated by the electrical resistance E inserted in the lower end D1 of the upright D moves spontaneously by convection upwards, as indicated by the arrow F, and as it cools it releases heat to the external environment or to the towels placed on the towel radiator C.

Thus, for as long as the thermostat A maintains the power supply to the electrical resistance E, the heat-transfer fluid circulates by convection inside the towel radiator C and, as is well known, it moves from the lower zone, where the thermostat A and the electrical resistance E are installed and where the heat-transfer fluid is warmer, towards the upper zone where it releases heat and, gradually cooling down, returns again to the lower zone of the towel radiator C to be reheated by the electrical resistance E.

Therefore, during operation, the heat-transfer fluid being heated by the electrical resistance E moves spontaneously by convection away from the thermostat A at which the temperature is at the set value.

Thus, the thermostat A is not subject to any overheating that might damage it.

However, it is well known to those skilled in the art that towel radiators are not always installed properly as described and depicted in Figure 1, as systems are sometimes found to be installed in the wrong condition depicted in Figure 2 wherein, as it can be seen, the towel radiator C is installed the wrong way round relative to the correct installation in Figure 1.

It can be seen, in fact, that in this installation, the end D1 of the upright D of the towel radiator C, into which the electrical resistance E is inserted and to which the thermostat A is connected, is located at the top of the towel radiator C itself and the port B1 of the cable gland ferrule B faces downwards.

Under these conditions, when the electrical resistance E heats the heat-transfer fluid, the latter moves spontaneously by convection upwards, creating a heat build-up at the thermostat A by overheating it to the point of hampering its proper functioning.

In addition to causing damage to the thermostat and incorrect temperature control, such incorrect installation situations can also cause the towel radiator to burst with serious consequences for people and things.

The present invention aims to solve the described problems that arise when the towel radiator is installed upside down, in the wrong way depicted in Figure 2.

It is therefore the object of the invention to realise an improved thermostat which, when assembled to a towel radiator, prevents it from operating if the towel radiator has been installed in the wrong way, in particular if the towel radiator has been installed upside down.

The set-forth object is achieved by the thermostat of the invention having the characteristics according to the main claim to which reference will be made.

Advantageously, the use of the thermostat according to the invention prevents wrongly installed towel radiators from being operated, particularly in the upside-down position.

Still advantageously, the use of the thermostat according to the invention allows even unskilled people to install a towel radiator properly and in a workmanlike manner.

Finally, advantageously, the use of the thermostat according to the invention prevents damage to the thermostat and the towel radiator from happening if the latter is installed in the upside-down position by mistake.

The set-forth object and advantages will be better emphasised below during the description of the thermostat and the towel radiator using it, both of which are the subject matter of the invention, which are described hereinafter, by way of illustration and not limitation, by referring to the attached drawings in which:
- Figure 1 represents the prior art comprising a properly installed towel radiator according to the rule of art and provided with a thermostat;
- Figure 2 represents the prior art comprising a wrongly installed towel radiator provided with a thermostat;
- Figure 3 represents the thermostat of the invention, in an axonometric view;
- Figure 4 schematically represents the interior of the thermostat of the invention;
- Figure 5 represents a towel radiator provided with thermostat, both according to the invention and installed according to the rule of art.

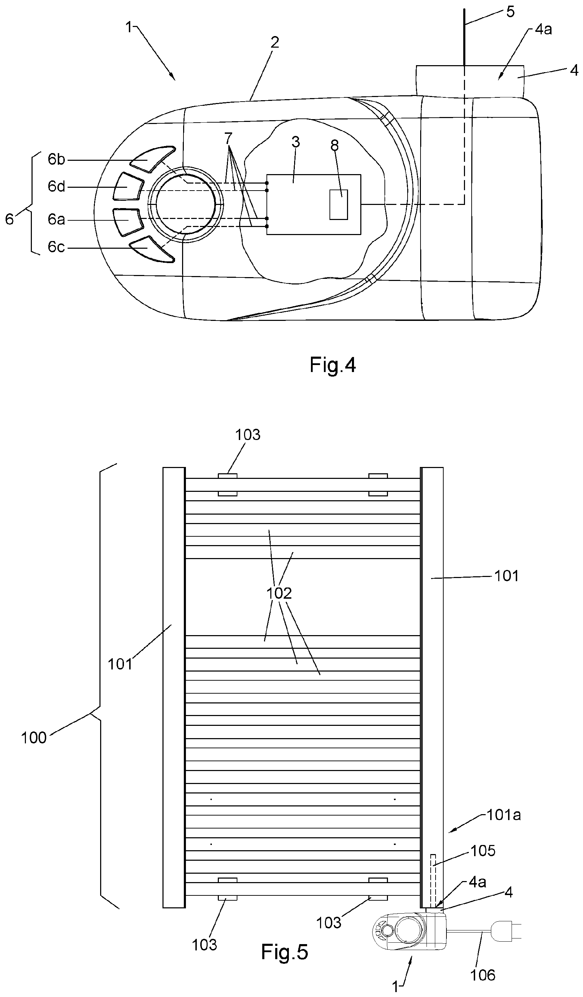

The thermostat of the invention is represented in Figures 3 and 4, where it is globally denoted by **1** and also in Figure 5, where it is applied to a heating apparatus, particularly a towel radiator, globally denoted by **100** and which will be discussed in more detail below, for commanding and controlling the temperature of the heat-transfer fluid circulating therein.

It should be noted that the thermostat **1** of the invention may also be applied to a heating apparatus other than a towel radiator.

It is observed that the thermostat **1** comprises a case **2** containing an electrical circuit **3** for commanding and controlling an electrical resistance **105** that heats the heat-transfer fluid circulating by convection in the heating apparatus **100.**

The casing **2** is provided with a cable gland ferrule **4** which connects the casing **2** and therefore the thermostat **1** to the heating apparatus **100** and is configured to allow the passage of electrical cables **5** which, passing through its cable gland port **4a**, connect the command and control electrical circuit **3** to the electrical resistance **105.**

We also observe the presence of buttons **6** commanding the functions of the thermostat **1** which are operatively connected to the electrical circuit **3** by means of command conductors **7** schematically represented in Figure 4.

According to the invention, the thermostat **1** comprises at least one position detector **8** operatively associated with the command and control electrical circuit **3** which allows to supply the electrical resistance **105** of the heating apparatus **100** only when the cable gland port **4a** of the cable gland ferrule **4** faces upwards.

Regarding the position detector **8,** it may be of any type and may include a liquid-conducting switch, for example, preferably but not exclusively, a mercury switch.

In another embodiment, the position detector **8** may comprise one or more inductive-type or capacitive-type sensors, or it may comprise one or more optical-type or magnetic-type sensors.

Figure 3 also shows that the thermostat **1** also comprises a screen **9** for displaying the operating parameters that are set/modified by the user when he/she intervenes on the command buttons **6.**

In particular, the command buttons **6** firstly comprise a first button **6a** which commands the switching on/the switching off of the heating apparatus **100.**

There is also a second button **6b** that commands the temperature increase and also a third button **6c** that commands the temperature reduction.

The presence of a fourth button **6d** to command a possible auxiliary device applied to the heating apparatus **100,** e.g. a ventilation unit (not shown) for moving warm heating air, can also be noted.

The thermostat **1** of the invention is particularly adapted to be employed in the aforementioned heating apparatus **100** of the towel radiator type, schematically shown in Figure 5, where, as it can be noted, it comprises two or more vertical tubular manifolds **101** and a plurality of horizontal tubular bodies **102** which are connected to the vertical tubular manifolds **101** so as to form a lattice-like structure which looks like the shape of a ladder within which a heat-transfer fluid circulates.

The presence of supporting means **103** that are adapted to secure the towel radiator **100** to a support structure and in a vertical position can also be observed.

An electrical resistance **105** inserted into the lower end **101a** of at least one of the vertical tubular manifolds **101** and an electrical cable **106** adapted to connect the electrical resistance **105** to an electrical power source are also present.

Preferably, but not exclusively, the heat-transfer fluid circulating in the towel radiator **100** is diathermic oil.

According to the invention, adjustment and control means are present in the towel radiator **100** which comprise the thermostat **1** described above.

Operationally, if the towel radiator **100** is installed provided with the thermostat **1** arranged in the proper operating configuration shown in Figure 5, the cable gland port **4a** of the cable gland ferrule **4** faces upwards.

In this situation the position detector **8,** operatively associated with the electrical command and control circuit **3,** finds that, indeed, the cable gland port **4a** of the cable gland ferrule **4** faces upwards and in this case allows the towel radiator **100** to start up when the user acts on the first button **6a** that allows it to be turned on.

Conversely, if the towel radiator **100** is installed in the wrong operating configuration shown for example in Figure 2 wherein the cable gland port **4a** of the cable gland ferrule **4** faces downwards, the position detector **8** identifies this abnormal installation of the towel radiator **100** and does not allow the start up.

On the basis of the foregoing, it is understood that the thermostat **1** subject matter of the invention achieves the intended object of enabling the towel radiator **100** to which it is applied to start up only if the towel radiator **100** is installed in the correct operating position.

In fact, it has been noted that this is ensured by the presence of the position detector **8** which, if the towel radiator **100** is installed properly, detects the correct position of the cable gland ferrule **4.**

The thermostat **1** of the invention thus prevents wrongly installed towel radiators from being put into operation and ensures that even unskilled persons are able to install a towel radiator in the correct position and in a workmanlike manner.

Advantageously, the use of the thermostat according to the invention prevents wrongly installed towel radiators from being operated.

During the operation step, modifications and variations may be made to the thermostat and to the towel radiator, both of which are the subject of the invention, which have not been described and depicted in the attached drawings.

It is clear, however, that any such variants shall be deemed to be protected if they fall within the scope of the attached claims.

## Claims

1. Thermostat (1) for commanding and controlling a heating apparatus (100), said thermostat (1) comprising:
- a casing (2) containing at least one electrical circuit (3) for commanding and controlling the temperature of an electrical resistance (105) which is supplied by an electrical power source and which heats the heat-transfer fluid wherein it is immersed and which circulates in said heating apparatus (100);
- a cable gland ferrule (4) configured to connect said casing (2) to said heating apparatus (100) and to allow the passage of electrical cables (5) connecting said electrical circuit (3) for commanding and controlling to said electrical resistance (105);
- one or more buttons (6) commanding the functions of said thermostat (1) that are operatively connected to said command and control electrical circuit (3),
**characterised in that** it comprises at least one position detector (8) operatively associated with said command and control electrical circuit (3), which enables the power supply of said electrical resistance (105) of said heating apparatus (100) only when the cable gland port (4a) of said cable gland ferrule (4) faces upwards.

2. Thermostat (1) according to claim 1, **characterised in that** said at least one position detector (8) is a conductive liquid switch.

3. Thermostat (1) according to claim 2, **characterised in that** said conductive liquid switch is a mercury switch.

4. Thermostat (1) according to claim 1, **characterised in that** said at least one position detector (8) is a capacitive sensor.

5. Thermostat (1) according to claim 1, **characterised in that** said at least one position detector (8) is an optical sensor.

6. Thermostat (1) according to claim 1, **characterised in that** said at least one position detector (8) is an inductive sensor.

7. Thermostat (1) according to claim 1, **characterised in that** said at least one position detector (8) is a magnetic sensor.

8. Thermostat (1) according to any one of the preceding claims, **characterised in that** it comprises a screen (9) for displaying the values of the operating parameters of said thermostat (1).

9. Thermostat (1) according to any one of the preceding claims, **characterised in that** said one or more buttons (6) for commanding the functions of said thermostat (1) comprise at least:
- a first button (6a) for commanding the switching on/the switching off of said heating apparatus (100);
- a second button (6b) for commanding the temperature increase of said heating apparatus (100);
- a third button (6c) for commanding the temperature reduction of said heating apparatus (100).

10. Heating apparatus (100) of the towel radiator type comprising:
- two or more vertical tubular manifolds (101) and a plurality of horizontal tubular bodies (102) which are connected to said vertical tubular manifolds (101) so as to form a lattice-like structure within which a heat-transfer fluid circulates;
- supporting means (103) adapted to secure said heating apparatus (100) to a support structure and in a vertical position;
- an electrical resistance (105) inserted into the lower end (101a) of at least one of said vertical tubular manifolds (101);
- an electrical cable (106) for connecting said electrical resistance (105) to an electrical power source;
- means for adjusting and controlling the temperature of said heat-transfer fluid which are connected to said lower end (101a) of at least one of said vertical tubular manifolds (101) at said electrical resistance (105),
**characterised in that** said adjustment and control means comprise a thermostat (1) according to any one of claims 1 to 9.

11. Heating apparatus (100) according to claim 10, **characterised in that** it is a towel radiator wherein said heat-transfer fluid is diathermic oil.

## Patentansprüche

1. Thermostat (1) zum Steuern und Regeln einer Heizvorrichtung (100), wobei der besagte Thermostat (1) Folgendes umfasst:
- ein Gehäuse (2), das mindestens eine elektrische Schaltung (3) zum Steuern und Regeln der Temperatur eines elektrischen Widerstands (105) enthält, der von einer elektrischen Stromquelle versorgt wird und das Wärmeträgerfluid erwärmt, in das er eingetaucht ist und das in der besagten Heizvorrichtung (100) zirkuliert;
- eine Kabelverschraubung (4), die dazu konfiguriert ist, das besagte Gehäuse (2) mit der besagten Heizvorrichtung (100) zu verbinden und den Durchgang von elektrischen Kabeln (5), die die besagte elektrische Steuer- und Regelungsschaltung (3) mit dem besagten elektrischen Widerstand (105) verbinden, zu ermöglichen;
- eine oder mehrere Tasten (6), die die Funktionen des besagten Thermostats (1) steuern und mit der besagten elektrischen Steuer- und Regelungsschaltung (3) wirkverbunden sind,
**dadurch gekennzeichnet, dass** er mindestens einen Positionsdetektor (8) umfasst, der der besagten elektrischen Steuer- und Regelungsschaltung (3) operativ zugeordnet ist und die Stromversorgung des besagten elektrischen Widerstands (105) der besagten Heizvorrichtung (100) nur dann ermöglicht, wenn die Kabelverschraubungsöffnung (4a) der besagten Kabelverschraubung (4) nach oben weist.

2. Thermostat (1) nach Patentanspruch 1, **dadurch gekennzeichnet, dass** der besagte mindestens eine Positionsdetektor (8) ein Schalter mit leitfähiger Flüssigkeit ist.

3. Thermostat (1) nach Patentanspruch 2, **dadurch gekennzeichnet, dass** der besagte Schalter mit leitfähiger Flüssigkeit ein Quecksilberschalter ist.

4. Thermostat (1) nach Patentanspruch 1, **dadurch gekennzeichnet, dass** der besagte mindestens eine Positionsdetektor (8) ein kapazitiver Sensor ist.

5. Thermostat (1) nach Patentanspruch 1, **dadurch gekennzeichnet, dass** der besagte mindestens eine Positionsdetektor (8) ein optischer Sensor ist.

6. Thermostat (1) nach Patentanspruch 1, **dadurch gekennzeichnet, dass** der besagte mindestens eine Positionsdetektor (8) ein induktiver Sensor ist.

7. Thermostat (1) nach Patentanspruch 1, **dadurch gekennzeichnet, dass** der besagte mindestens eine Positionsdetektor (8) ein Magnetsensor ist.

8. Thermostat (1) nach jeglichem der vorhergehenden Patentansprüche, **dadurch gekennzeichnet, dass** er einen Bildschirm (9) zum Anzeigen der Werte der Betriebsparameter des besagten Thermostats (1) umfasst.

9. Thermostat (1) nach jeglichem der vorhergehenden Patentansprüche, **dadurch gekennzeichnet, dass** der besagte eine oder die besagten mehreren Tasten (6) zum Steuern der Funktionen des besagten Thermostats (1) mindestens Folgendes umfassen:
- eine erste Taste (6a) zum Steuern des Ein-/Ausschaltens der besagten Heizvorrichtung (100);
- eine zweite Taste (6b) zum Steuern der Temperaturerhöhung der besagten Heizvorrichtung (100);
- eine dritte Taste (6c) zum Steuern der Temperaturreduzierung der besagten Heizvorrichtung (100).

10. Heizvorrichtung (100) vom Typ Handtuchheizkörper, umfassend:
- zwei oder mehr vertikale rohrförmige Verteiler (101) und eine Vielzahl von horizontalen rohrförmigen Körpern (102), die mit den besagten vertikalen rohrförmigen Verteilern (101) verbunden sind, um eine gitterartige Struktur zu bilden, in der ein Wärmeträgerfluid zirkuliert;
- Tragmittel (103), die dafür ausgelegt sind, die besagte Heizvorrichtung (100) an einer Tragstruktur und in einer vertikalen Position zu befestigen;
- einen elektrischen Widerstand (105), der in das untere Ende (101a) von mindestens einem der besagten vertikalen rohrförmigen Verteiler (101) eingefügt ist;
- ein elektrisches Kabel (106) zum Verbinden des besagten elektrischen Widerstands (105) mit einer elektrischen Stromquelle;
- Mittel zum Einstellen und Regeln der Temperatur des besagten Wärmeträgerfluids, die mit dem besagten unteren Ende (101a) von mindestens einem der besagten vertikalen rohrförmigen Verteiler (101) am besagten elektrischen Widerstand (105) verbunden sind,
**dadurch gekennzeichnet, dass** die besagten Einstell- und Regelungsmittel einen Thermostat (1) nach jeglichem der Patentansprüche 1 bis 9 umfassen.

11. Heizvorrichtung (100) nach Patentanspruch 10, **dadurch gekennzeichnet, dass** es sich um einen Handtuchheizkörper handelt, wobei das besagte Wärmeträgerfluid diathermisches Öl ist.

## Revendications

1. Thermostat (1) pour la commande et le contrôle d'un appareil de chauffage (100), ledit thermostat (1) comprenant:
- un boîtier (2) contenant au moins un circuit électrique (3) pour commander et contrôler la température d'une résistance électrique (105) qui est alimentée par une source d'énergie électrique et qui chauffe le fluide caloporteur dans lequel elle est immergée et qui circule dans ledit appareil de chauffage (100);
- une virole passe-câbles (4) configurée pour relier ledit boîtier (2) audit appareil de chauffage (100) et pour permettre le passage de câbles électriques (5) reliant ledit circuit électrique (3) pour la commande et le contrôle à ladite résistance électrique (105);
- un ou plusieurs boutons (6) pour la commande des fonctions dudit thermostat (1) qui sont reliés de manière opérationnelle audit circuit électrique de commande et de contrôle (3),
**caractérisé en ce qu'**il comprend au moins un détecteur de position (8) associé de manière opérationnelle audit circuit électrique de commande et de contrôle (3), qui permet l'alimentation de ladite résistance électrique (105) dudit appareil de chauffage (100) uniquement lorsque l'orifice passe-câbles (4a) de ladite virole passe-câbles (4) est orienté vers le haut.

2. Thermostat (1) selon la revendication 1, **caractérisé en ce que** ledit au moins un détecteur de position (8) est un interrupteur à liquide conducteur.

3. Thermostat (1) selon la revendication 2, **caractérisé en ce que** ledit interrupteur à liquide conducteur est un interrupteur à mercure.

4. Thermostat (1) selon la revendication 1, **caractérisé en ce que** ledit au moins un détecteur de position (8) est un capteur capacitif.

5. Thermostat (1) selon la revendication 1, **caractérisé en ce que** ledit au moins un détecteur de position (8) est un capteur optique.

6. Thermostat (1) selon la revendication 1, **caractérisé en ce que** ledit au moins un détecteur de position (8) est un capteur inductif.

7. Thermostat (1) selon la revendication 1, **caractérisé en ce que** ledit au moins un détecteur de position (8) est un capteur magnétique.

8. Thermostat (1) selon l'une quelconque des revendications précédentes, **caractérisé en ce qu'**il comprend un écran (9) pour l'affichage des valeurs des paramètres de fonctionnement dudit thermostat (1).

9. Thermostat (1) selon l'une quelconque des revendications précédentes, **caractérisé en ce que** ledit un ou plusieurs boutons (6) pour la commande des fonctions dudit thermostat (1) comprennent au moins:
- un premier bouton (6a) pour la commande de la mise en marche/arrêt dudit appareil de chauffage (100);
- un deuxième bouton (6b) pour la commande de l'augmentation de la température dudit appareil de chauffage (100);
- un troisième bouton (6c) pour la commande de la réduction de la température dudit appareil de chauffage (100).

10. Appareil de chauffage (100) du type radiateur sèche-serviettes comprenant:
- deux ou plusieurs collecteurs tubulaires verticaux (101) et une pluralité de corps tubulaires horizontaux (102) qui sont reliés auxdits collecteurs tubulaires verticaux (101) de manière à former une structure en treillis à l'intérieur de laquelle circule un fluide caloporteur;
- des moyens de support (103) indiqués pour fixer ledit appareil de chauffage (100) à une structure de support et en position verticale;
- une résistance électrique (105) insérée dans l'extrémité inférieure (101a) d'au moins un desdits collecteurs tubulaires verticaux (101);
- un câble électrique (106) pour relier ladite résistance électrique (105) à une source d'énergie électrique;
- des moyens de réglage et de contrôle de la température dudit fluide caloporteur qui sont reliés à ladite extrémité inférieure (101a) d'au moins un desdits collecteurs tubulaires verticaux (101) à hauteur de ladite résistance électrique (105),
**caractérisé en ce que** lesdits moyens de réglage et de contrôle comprennent un thermostat (1) selon l'une quelconque des revendications 1 à 9.

11. Appareil de chauffage (100) selon la revendication 10, **caractérisé en ce qu'il** s'agit d'un radiateur sèche-serviettes dans lequel ledit fluide caloporteur est de l'huile diathermique.
